# EUROPEAN PATENT APPLICATION

(11) **EP 1 903 718 A1**
(43) Date of publication of application: **26.03.2008**
(21) Application number: 06019607.8
(22) Date of filing: 19.09.2006
(51) Int. Cl.: H04L 12/28

(54) **Method for forwarding data packets and access node device**

(71) Applicant: Nokia Siemens Networks GmbH & Co. KG, 81541 München (DE)
(72) Inventor: Camilo, Tiago, 2950 Quinta do Anjo (PT); Rute, Esteves, Carvalho, Sofia, Dr., 81673 München (DE); Pasqualini, Sandrine, 81547 München (DE); Wevering, Stefan, 82284 Grafrath (DE); de Frias Rebelo Nunes, Pedro, Ricardo, 2795016 Linda-A-Velha (PT)

(57) **Abstract**

Described is a method for forwarding data packets (DP1 to DP3). The method comprising the steps:
- sending a first data packet (DP1) from a first user device or network (UE1) to a first access node device (AN1),
- receiving the first data packet (DP1) in the first access node device (AN1),
- using an address data (AN2-IP) of the second user device or network (UE2) to determine the address data of a second access node device (AN2),
- sending a second data packet (DP2) from the first access node device (AN1) to the second access node device (AN2).

## Description

The invention relates to a method for forwarding data packets, especially between end user devices connected to the same access network but to different access nodes.

One kind of an access network may be an Ethernet access network or another network type. The access network provides access to a second network, for instance to the Internet or to a service provider network. A plurality of user devices or networks are connected to an access node, for instance using copper telephone lines and DSL methods.

Thus the access network or the MAN (Metropolitan Area Network) is preferably not IP routed but layer 2 switched. If the network has IP awareness, i.e. uses some IP information it may be called a layer 2.5 network. The so called switched IP transport concept is described for instance in WO 2005/112363 A1, WO 2006/018420 A1 or MUSE (MUlti Service access Everywhere), D A2.2, Network architecture and functional specifications for the multi-service access and edge", 19th January 2005, pages 131 to 137.

It is an object of the invention to provide a simple method for forwarding data packets, especially in an access network. Furthermore, an access node device should be provided. Especially the method should allow address isolation between the user devices. Furthermore, a device should be provided.

The object related to the method is solved by the method of claim 1. Embodiments are given in the subclaims.

In an embodiment the method comprises the steps:
- sending a first data packet from a first user device to a first access node device,
   the first data packet comprises:
   - preferably an address data of the first access node as a first destination address, preferably a layer 2 address, such as an Ethernet address.
   - an address data of a second user device as a second destination address, preferably a layer 3 address, such as an IP-address. receiving the first data packet in the first access node device using the address data of the second user device to determine the address data of the second access node device,
- sending a second data packet from the first access node device to the second access node device,
   the second data packet comprises:
   - the address data of the second access node as a first destination address, preferably a layer 2 address, such as an Ethernet address,
   - the address data of the second user device as a second destination address, preferably a layer 3 address, such as an IP-address.

This method is based on the following considerations. Layer 2 based access networks, for instance those based on Ethernet, may use a strategy to isolate traffic from different users and different service providers. This can be achieved using, for instance, a switched IP transport method, where service connections are established between an Access Node (AN) of a Network Access Provider (NAP) and the peering point of the Network Service Provider (NSP), i. e. an Edge Node (EN). A service connection may be administratively set up by the NAP between one or more ANs and the peering points of an NSP, or of an Application Service Provider (ASP). It would be the responsibility of the AN to bind the user sessions to the appropriate service connections.

The peering point is the point or device to which the communication in the higher layer, for instance, in the IP layer is directed to. It could be peering between two or more end user equipments or peering between end user equipment and a server or router in the service provider network or access network.

In the switched IP transport method, the access nodes may perform MAC (Medium Access Control) isolation, using MAC address translation, and IP (Internet Protocol) session awareness based upon the IP addresses of the User Equipment (UE). The MAC isolation forces traffic forwarding from the customer towards the NSPs or ASPs peering points (e.g. default gateways and BRAS (Broadband Remote Access Server)). This is performed regardless whether the traffic is destined from one customer to a server in the network, or even from one customer to another one in the same access network.

For instance, if there is communication between two customers connected to the same access network, by the method of switched IP transport, traffic will always be forwarded from one customer to the ASP / NSP peering point and from here back to the access network to the other customer. This results in wasting network bandwidth and in using unnecessary traffic processing capacity of the aggregation nodes and of the ASP/NSP peering point.

For access networks implementing switched IP transport, no current solution that enables local peering between customers using IP is known.

The method proposed and presented here reduces the network bandwidth utilization and the usage of traffic processing capacity of network equipment by enabling direct traffic forwarding within the NAP network without having to send traffic to the ASP / NSP peering point, this is in the following called Local Peering (LP).

Local peering might be naturally provided using IP routing, i. e. in layer 3, in access nodes instead of switched IP transport, as far as the proper subnet configuration is performed to install the proper routes. However with IP routing and from a MAN (Metropolitan Area Network) perspective, configuring the rules that enable local peering is not a trivial task, due first to the fact that operators do not reveal information about their internal routing. Considering an intra-operator (intra-domain) scope only, local peering based on IP routing would require heavy IP awareness in elements such as the ANs, which today cannot cope with such requirements.

Another issue relates to the fact that many access providers are evolving from IP routing based access networks to Ethernet based access networks, and LP support for these cases, such as switched transport, must also be provided.

Local peering should be possible with switched IP transport between two customers, according to their service bindings, as long as they are connected to the same access node. However a method should also be described that supports local peering between customers connected to different ANs.

The method proposed here, provides Local Peering (LP) between the ANs of the same access network where two customers are connected. This mechanism avoids the utilization of the ASP/NSP peering point without compromising the initial security and scalability features obtained by switched IP transport. This is achieved, by enabling forwarding traffic of local peers directly between ANs without using the NAP or ASP peering points, e.g. so called edge nodes EN. The method allows local (direct) peering between customers connected to the access network via the same or via different access nodes.

The higher scalability means that the aggregation network equipment in the access network between the access node device and the edge node device only needs to know, for instance, the MAC address of the access node and not the MAC address of each user device or user network. This changes dramatically the size of the forwarding tables within the access network.

Using Local Peering in access networks implementing switched IP transport, the performance of traffic forwarding between local peers can be improved since the traffic does not need to be forwarded to the EN. Advantages introduced by this mechanism relate to a better bandwidth efficiency and to a latency reduction in communication between peers. This is beneficial as it promotes peer-to-peer traffic that is local to the same access provider. Additionally, this local peering mechanism achieves this without sacrificing the scalability and security benefits gained by using the switched IP transport model.

In was suggested that local peering is possible between two customers connected to the same access node. The method presented here allows local peering between customers connected to the access network over different access nodes.

The data packets comprise typically a header field and the payload. The header field comprises source and destination data to forward the packet. The user devices are, for instance, computers, telephones, routers etc.

The first destination address relates, for instance, to a lower layer protocol of a protocol stack. For instance, to the second layer of a protocol stack, whereby the first layer is the so called physical layer. The second layer may comprise the MAC layer (Media Access Control). The second destination address relates to a higher protocol layer than the lower protocol layer of the first destination address. The higher layer may be, for instance, layer 3. Layer 3 may comprise the Internet protocol.

The determination of the address data of the second access node device can be done, for instance, using a data base. The data base is in the most simple case a look-up table. Distributed data bases are possible as well.

By sending the second data packet from the first access node device directly to the second access node device it is possible to circumvent an so-called edge router of an Internet service provider (ISP), of an application service provider (ASP) and so on. The edge router is, for instance, part of a broadband network. The sending of the second data packet directly between the access node devices saves bandwidth in the access network.

In an embodiment the second data packet comprises the same payload as the first data packet. But the second data packet does not comprise a first source address data, for instance a MAC-address, of the first user device. Therefore, MAC isolation is used. The advantage of this is higher security and higher controllability of the forwarding by the access nodes. For instance, correct charging can be secured under all circumstances.

In a next embodiment, the method comprises the step:
- automatically sending a query message or query messages to all access node devices known to the first access node device,
- the query message comprises:
   the address of the second user device.

By this step it is possible to extend the data base automatically or, if no data base is used, to automatically determine the address of the second access node device. This is a simple way compared to a method in which the data base is stored manually.

In a further embodiment the query message or the query messages result in an answer message received in the first access node. The answer message was sent typically by the second access node device, i. e. that device which found the address of the second user device in his own look-up table, for instance. The answer message comprises the address of the second access node device. By using this address it is possible for the first access node device to forward the payload of the first data packet to the second access node device directly. The answer message may also comprise the address of the second user device. This helps the first access node device to find corresponding pairs of query messages and answer messages. Both address data are preferably stored in the data base to prevent further requests for the second user device in the first access node device.

In a next embodiment, there is a first case in which an answer message is received from another access node. And there is a second case in which there is no such answer message received. In the second case the first data packet is forwarded to an edge node device, i. e. to a node different from the second access node. Contrary to this, the edge node device is not used for forwarding of the first data packet, i. e. in the first case.

In a next embodiment, the data base is updated also in the second case. The data base is updated with the address data of the edge node together with the address data of a user device for which no answer message could be received from another access node. By this, further query messages for this user device are prevented.

In a further embodiment, the first access node buffers packets for the second user device while waiting for the answer message. This effects that no packets are lost during transmission. Alternatively or in the case of buffer overflow it is possible to drop the data packets. Higher protocol layers secure retransmission or other error corrections.

In another embodiment of the method, the query message is sent depending on a user profile defined for the first user device. This means that the local peering is for instance only possible for users who pay for this service.

In a next embodiment of the method, the query message is sent using only a specific VLAN (Virtual LAN) belonging to a specific service provider. The specific VLAN connects only access node devices of only one network service provider. The network provider may be identified based on information provided by the first user device, for instance a domain name. This measurement reduces the amount of query messages if there is more than one service provider.

The method can be easily implemented, in the case that the first access node device and the second access node device are connected by an Ethernet, i. e. wherein the address data of the second access node is a MAC address. Furthermore, the method is easy to install in cases where the address of the second user device is an IP address (Internet protocol). For instance, it is possible to use the method of RFC 4389 or a similar method. No further standardization is necessary in this case.

Furthermore, an embodiment relates to an access node device. The access node device has a receiving unit, a sending unit and a determination unit. Especially this units perform the methods mentioned above. Therefore, the same technical effects are valid for the access node device and its embodiments.

In the following embodiments of the invention are illustrated with reference to the Figures, wherein:
- Figure 1: illustrates the paths of data packets in an access network,
- Figure 2: illustrates the message flow in the access network, and
- Figure 3: shows the main units of an access node.

The embodiments are only for illustration purposes and do not restrict the scope of the invention.

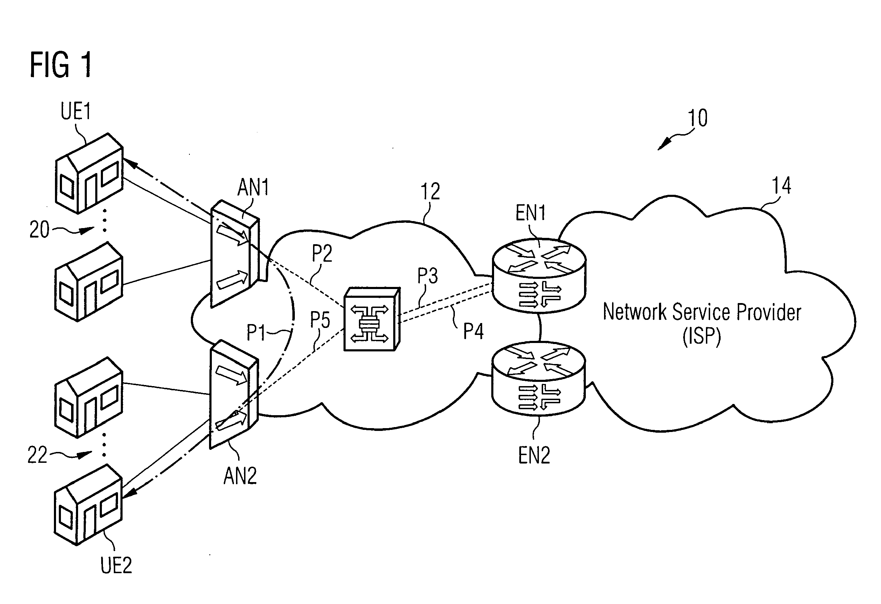

Figure 1 illustrates a packet transmission network 10, which is called a packet network in the following. The packet network 10 contains an access network 12 and a provider network 14. In the embodiment of Figure 1 the access network 12 contains a plurality of access nodes, whereof two access nodes AN1 and AN2 are shown. The access nodes AN1 and AN2 are, for instance, access nodes hiX sign 5630/35 produced by Siemens AG. Alternatively, products of other firms can be used.

A plurality of user devices, for instance routers, or user networks are connected to access node AN1, for instance a user device or network UE1 and further user devices or networks 20. Likewise, a plurality of user devices is connected to access node AN2, the user device or network UE2 and user devices or networks 22. In the example, the two access nodes AN1 and AN2 are arranged in a local neighbourhood, for instance with a distance from each another that is lower than, for instance, one hundred kilometres or lower than 20 Kilometres. Both access nodes are, for instance, placed in the same town.

The user devices UE1 and UE2 are connected to the access node AN1 or AN2, for instance by:
- ADSL (Asymmetric Digital Subscriber Line), ADSL(2) or ADSL (2+),
- SHDSL (Symmetric High density DSL) or SHDSL(bis),
- VDSL (Very High Data Rate DSL) or VDSL2,
- telephone lines,
- fast Ethernet, GigaEthernet,
- xPON (Passive Optical Network), or
- WiMAX (Worldwide interoperability for Microwave Access).

In the case of DSL the access nodes AN1, AN2 are also called DSLAM (DSL Access Multiplexer).

In the embodiment shown in Figure 1, the access network 12 is an Ethernet network. The access nodes AN1 and AN2 and the other access nodes of the same access service provider are connected directly or over several aggregator nodes, see for instance aggregator node 24, to at least one edge node of the access network 12.

In Figure 1 two edge nodes EN1 and EN2 are shown. In the case of an Ethernet access network 12 the aggregator node 24 may be the product hiD 6650 of the company Siemens AG. Alternatively, products of other companies but with the same functionality may be used. The edge nodes EN1 and EN2 can be called BRAS (Broadband Remote Access Server)and work, for instance, according to the Internet protocol. Functions of the EN1, EN2 may be, for instance:
- Authentication,
- Authorization,
- Accounting,
- auto configuration.

The provider network 14 contains, for instance, a broadband switching unit (not shown).

In the example it is assumed that both user devices UE1 and UE2 have subscribed the service provided by the same Internet service provider (ISP). But the methods described are also feasible if different service providers are involved if the service providers agree to allow this type of forwarding to be performed in the NAP. In this example the Internet service provider peering point is the edge node EN1.

Figure 1 shows two possibilities for forwarding data packets between user devices UE1 and UE2. The first possibility is from user device UE1 over access node AN1, access node AN2 to the user device UE2, see path P1. The second possibility is from user device UE1 to access node AN1, over aggregator node 24 to the edge node EN1, and from the edge node EN1 back to the aggregator node 24 over the access node 2 to the user device UE1, see paths P2 to P5. Needless to say that the data traffic can also be forwarded in the opposite direction, i. e. from user device UE2 to user device UE1.

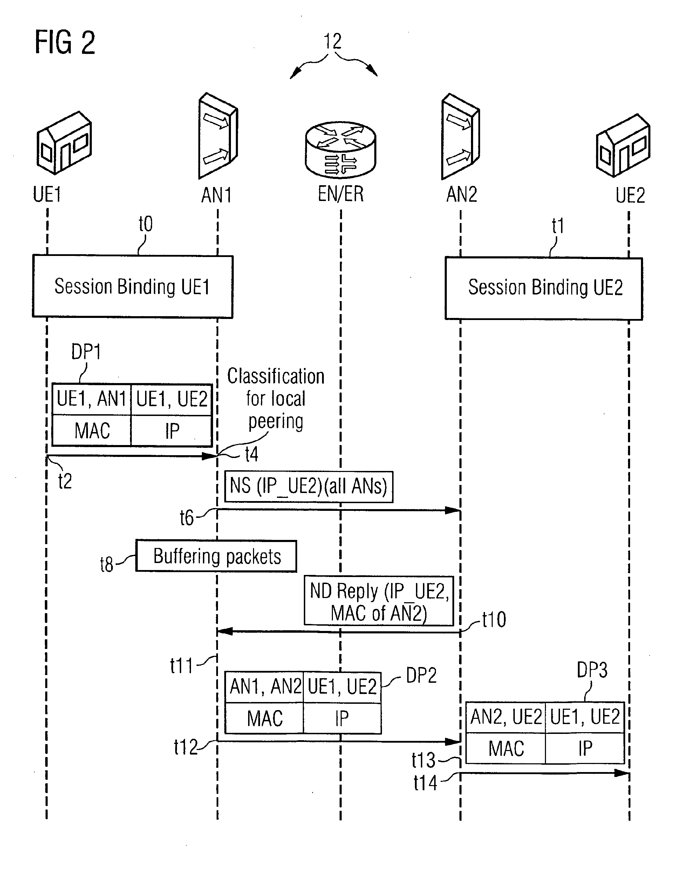

The first possibility will be described in connection with Figure 2 below. The second possibility is used in the embodiment only if the first possibility fails.

Figure 2 illustrates the message flow in the access network. At a time t0 the user device UE1 establishes a connection to the Internet service provider using access node AN1 and changing passwords or other identification data. At time t1 also user device UE2 establishes a session binding over access node AN2. In the example, time T1 is after time T2. In an alternative embodiment the session binding of user device UE2 takes place before or at the same time as the session binding of user device UE1.

Thereafter, user device UE1 tries to send a first data packet DP1 with user payload data to user device UE2. Therefore user device UE1 sends data packet DP1 to access node AN1. The user payload data are, for instance, program data, music data, speech data. Furthermore, the data package DP1 contains:
- a MAC address data of user device UE1 being a source address,
- a MAC address data of access node AN1 being a destination address, but this is not mandatory, although it is the most common situation in the switched IP transport proposal.
- an IP address data of user device UE1 being a source address, and
- an IP address data of user device UE2 being a destination address.

After receiving data packet DP1, the access node device AN1 performs a classification for local peering. The access node device AN1 performs, for instance, a local peering table look-up based on the IP destination address of user device UE2 contained in data packet DP1. This is, for instance, an IP version 6 address. This is done at time t4. A previous classification could be done to see whether the traffic from customer UE1 may be optimised using local peering.

Since there was no prior communication between user devices UE1 and UE2, the lock-up will fail and the access node AN1 sends a neighbour solicitation (NS) query for the IP address of user device UE2 at a time t6. The neighbour solicitation query is called in short NS query and contains:
- the IP address of user device UE2 as given in data packet DP1, and
- a default address, which addresses all access nodes in the access network 12, i. e. especially also access node devices AN1 and AN2.

Alternatively, it is possible to send separate messages to all access nodes known to access node AN1.

When access node device AN2 receives the NS query, it replies with its own MAC address at time t10. The MAC address of access node device AN2 is sent in a neighbour discovery (ND) reply message that is sent back to access node 1. The neighbour discovery reply message is called an ND reply in the following. The ND reply contains:
- the IP address of user device UE2, and
- the MAC address of access node AN2.

During time t6 and the receiving of the ND reply after time t10 the access node AN1 buffers the data packet DP1 and every following data packet sent from user device UE1 to UE2 in a data packet buffer unit. In other embodiments these data packets are dropped or forwarded to the edge node EN1.

After receiving the ND reply, the access node AN1 updates its local peering table at time t11. After this, the access node AN1 starts forwarding user device UE1 traffic to access node AN2. At time t12 a data packet DP2 is forwarded. The data packet DP2 contains:
- the payload data of data packet DP1,
- the MAC address data of access node AN1 as a source address,
- the MAC address data of access node AN2 as a destination address,
- the IP address data of user device 1 as a source address, and
- the IP address data of user device 2 as a destination address.

Thus, access node AN1 forwards the traffic replacing the source MAC address (UE1 MAC address) by its own address (AN1 MAC address). The MAC destination address is replaced by the MAC address of access node 2. This allows MAC address isolation.

When access node AN2 receives a packet, for instance data packet DP2, from access node AN1, the packet contains as MAC source address the address of access node AN1 and as MAC destination address the address of access node AN2. Access node AN2 performs a look-up for the IP address of user device UE2 because this address is given in data packet DP2 as IP destination address. With the help of this look-up the access node AN2 obtains the mapping to the MAC address of user device UE2 and again changes the frame header before sending it to user device UE2, see time t13. At time t14 the access node AN2 forwards a data packet DP3 to the user device UE2. Data packet DP3 contains:
- the payload data of data packet DP2,
- the MAC address data of access node AN2 as a source address,
- the MAC address data of user device UE2 as a destination address,
- the IP address data of user device UE1 as a source address, and
- the IP address data of user device UE2 as a further source address.

Customer VLANs can also be considered by the access nodes AN1 and AN2.

As explained all steps are done without using edge node EN1 or EN2. Therefore, the traffic is forwarded over the short path P1 compared with the long paths P2 to P5, see Figure 1. This saves access network 12 bandwidth.

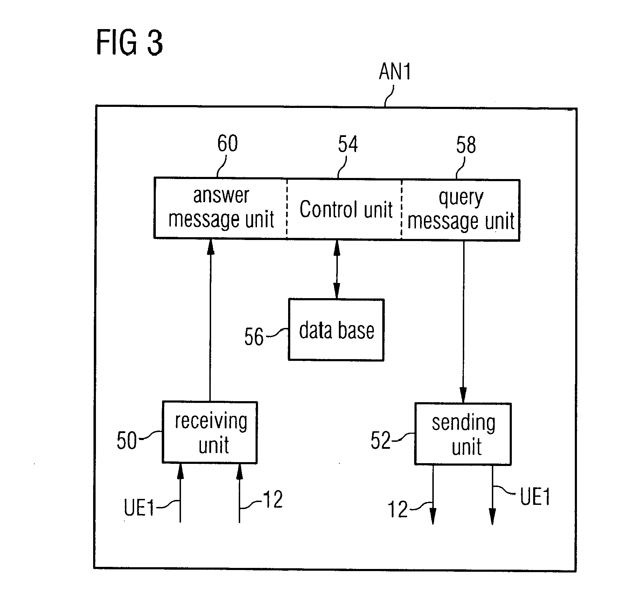

Figure 3 shows a main unit of access node AN1. The access node AN1 comprises:
- a receiving unit 15,
- a sending unit 52,
- a control unit 54, and
- a data base 56.

The control unit 54 contains an answer message unit 60 for processing the ND reply and a query message unit 58 for creating the NS message. The receiving unit 50 receives data packet DP1 from user device UE1 and forwards the relevant data to the control unit 54. Control unit 54 determines the MAC address of the access node AN2, i. e. the access node to which user device UE2 is coupled, with the help of the data base 56. If there is no entry in data base 56, the control unit 54 signals this fact to the query message unit 58. The query message unit 58 creates a NS message and this message is sent with the help of the sending unit 52 to the access network 12.

The receiving unit 50 receives from the access network 12 after this the ND reply message and signals this again to the control unit 54, especially to the answer message unit 60. The answer message unit 60 reads the data from the ND reply message and updates the data base 56 with the help of the control unit 54. After this, the control unit 54 starts the forwarding of data packets to the access node AN2, as explained according to Figure 2 for data packet DP3. Data packet DP3 is sent with the help of the sending unit 52.

The access node AN1 may be implemented using a processor and software. Alternatively, access node AN1 may be implemented using only circuitry and no software.

In another embodiment the data base 56 is stored outside access node AN1. Data base 56 may be a distributed data base in another embodiment.

In the embodiments shown in Figure 1 to Figure 3 the IP addresses are IP version 6 addresses. But it is also possible to use the former IP version 4 addresses. In the case of Ipv4 the neighbour discovery process is replaced by an ARP process (Address Resolution Protocol),see RFC 826), i.e., for instance, a neighbour discovery proxy is replaced by an ARP proxy.

Therefore, local peering switched IP transport is possible. Part of the solution to provide local peering for IPv6 traffic in switched IP transport, is achieved by introducing to the ANs the Neighbour Discovery Proxy (ND-Proxy) functionality. In this way the AN replies to Neighbour Solicitation (NS) requests coming from any UE or from the network side, from another AN, for instance. The Neighbour Solicitation requests are used, among other things, to discover the Ethernet MAC address used for a host with a specific IPv6 address. The AN shall contain a Local Peering Table (LP Table) that contains the IPv6 addresses the AN has learned of being of Local Peering type, and the table includes the mapping of these addresses to the corresponding MAC addresses, over which the IPv6 destination is reachable. This table is based on replies to the NS queries sent by the AN. According to the switched IP transport architecture, the MAC addresses corresponding to IPv6 addresses shall be the MAC addresses of the AN nodes over which a UE with that IPv6 address is reachable.

For every packet the AN receives from one customer, the AN performs a LP table lookup based on the IPv6 destination address. If the lookup is successful the AN then forwards the packet to the MAC address returned by the lookup action. If the LP table lookup is not successful, then the AN sends a NS query for the destination IPv6 address. If the destination IPv6 address corresponds to the address of another customer connected to the same access network, the AN connecting to that customer shall answer the AN query with its own MAC address. The answer is used to insert a new entry in the LP table of the first AN. Using this information the originating AN will then forward the packet to the newly learned MAC address.

The MAC address resulting from the LP table lookup or from the NS query, is the MAC address of the AN where the node with the destination IPv6 address is connected to. As such the ANs forward between them the IPv6 packets of peers that are locally connected to the NAP without using the EN. In this way MAC isolation is still performed in the packets sent between the access nodes, i.e., MAC source and destination addresses used in this local peering mechanism are the MAC addresses of the ANs where the peers are connected to.

If the LP table lookup is not successful and if after a certain time no answer is received to the NS query, the packet shall be forwarded to the EN. In this method it is possible to replace the MAC source address packets transmitted from one customer by the source address of the access node, thus hiding at layer 2 the identity of the entity originating the traffic. this allows high security and secures that only the access node can control the forwarding of the data packets. Customer side IP sessions are characterized for instance by:
- the customer's equipment MAC and associated IP address;
- optionally by a C-VLAN (Customer Virtual Local Area Network), DSCP (Differentiated Services Code Point) code points, 1p bits or transport port, compare IEEE (Institute of Electrical and Electronics Engineers) 802.1p.

The AN binds IP sessions on the customer side to the network side IP service connections based on this information. If a frame arrives to the AN from a user, the AN forwarder looks up a matching session based on the information described above. If a match is found and the frame is untagged the appropriate S-VLAN (Service VLAN) of the service connection is added. If the frame is tagged the C-VLAN tag is replaced by the appropriate S-VLAN tag. The MAC addresses are replaced with the MAC addresses of the service connection and forwarded towards the NSP or ASP peering point.

The information that a destination IPv6 address is not locally peered may also be cached in the AN so that a NS query is not repeated for that destination.

When an AN receives a packet from another AN, the receiving AN follows the same procedure as used for regular switched IP traffic to deliver traffic to the customer. The service session is identified based on the destination IPv6 address and eventually other service delimiting fields (e.g. Service VLAN). According to the session, the packet is encapsulated with the appropriate L2 header using the appropriate MAC address and eventually other fields (e.g. MAC address and Customer VLAN). The packet is then forwarded to the customer.

When the LP table lookup fails and the AN waits for the reply to the ND query, the AN can handle the traffic for that IPv6 destination in several ways:
- Packet dropping based on a timeout mechanism. Packets are buffered until an interval times out; the AN then drops packets indiscriminately, or according to a more selective dropping mechanism. The AN may have to implement ICMPv6 functionality such as the error Destination Unreachable.
- Packet dropping until the LP Table entry for that IPv6 address is learned. In this approach all packets sent by the UE are discarded until the AN receives a NS reply (no buffering is applied). The AN may have to implement ICMPv6 functionality such as the error Destination Unreachable.
- alternatively no packets are dropped, but all packets are forwarded to the EN, with or without buffering.

The application of the Local Peering process by the AN on customer traffic could be performed or not according to the customer's profile. This can be controlled for each customer depending on the network/internet service provider policies and on the type of contract agreement these entities hold with their customers.

For service isolation reasons the NS query may be performed only on the specific VLANs belonging to a specific NSP, NSP-VLAN. The NSP-VLAN connects all the ANs serving a specific NSP and is identified based on information provided by the UE, e.g., domain name.

## Claims

1. Method for forwarding data packets (DP1 to DP3),
the method comprising the steps:
sending a first data packet (DP1) from a first user device or network (UE1) to a first access node device (AN1),
the first data packet (DP1) comprises:
an address data (UE2-IP) of a second user device or network (UE2) being a second destination address,
receiving the first data packet (DP1) in the first access node device (AN1),
using the address data (UE2-IP) of the second user device or network (UE2) to determine the address data of a second access node device (AN2),
sending a second data packet (DP2) from the first access node device (AN1) to the second access node device (AN2),
the second data packet (DP2) comprises:
the address data (AN2-MAC) of the second access node device (AN2) being a first destination address,
the address data (UE2-IP) of the second user device or network (UE2) being a second destination address.

2. The method of claim 1, wherein the step of determining the address data of the second access node (AN2) comprises the step of:
performing a search based on the address (UE2-IP) of the second user device or network (UE2-IP).

3. The method of claim 2, wherein the step of determining the address data of the second access node device (AN2) comprises the step of:
automatically extending a data base (56) if no entry is found for the destination address (UE2-IP) of the second user device or network (UE2-IP).

4. The method of one of the preceding claims, wherein the step of determining the address data of the second access node device (AN2) comprises the step:
sending a query message (NS) or query messages to all access node devices known to the first access node device (AN1),
the query message comprises:
the address (UE2-IP) of the second user device or network (UE2).

5. The method of claim 4, wherein after sending the query message (NS) or the query messages an answer message (ND) is received in the first access node (AN1), the answer message (ND) comprises:
the address of the second access node device (AN2), and
preferably, the address (UE2-IP) of the second user device or network (UE2).

6. The method of claim 5, wherein after receiving the answer message (ND) the address of the second access node device (AN2) is stored in the data base together with the address data (UE2-IP) of the second user device (UE2).

7. The method of one of the preceding claims, wherein there is a first case in which an answer message (ND) from another access node (AN2) is received in access node (AN1), and wherein there is a second case in which there is no such answer message (ND), and
wherein in the second case the following step is performed:
forwarding a data packet to an edge node device (EN1), the edge node device (EN1) is not used for forwarding data packets in the first case.

8. The method of claim 7, wherein in the second case a data base (56) is updated with the address data of the edge node (EN) together with the address data of a user device for which no answer message (ND) could be received from another access node (AN2).

9. The method of one of the claims 3 to 8, comprising the step:
buffering (T8) packets for the second user device or network (UE2) in the first access node (AN1).

10. The method of one of the claims 3 to 9, wherein the query message (NS) is sent or the data base (56) is extended depending on a user profile defined for the first user device or network (UE1).

11. The method of one of the preceding claims, wherein the query message (NS) is sent or the data base (56) is extended using only a specific VLAN belonging to a specific service provider,
this specific VLAN connects only access node devices of only one service provider.

12. The method of one of the preceding claims, wherein the first access node device (AN1) and the second access node device (AN2) are connected by an Ethernet,
and/or wherein the address data of the second access node (AN2) is an address of a first protocol layer, preferably a MAC address,
and wherein the address of the second user device (UE2) is an address of a second layer that is a higher protocol layer than the first protocol layer, preferably an IP address.

13. The method of one of the preceding claims as far as referred to claim 4 or 5, wherein the query message (NS) and/or the answer message (ND) are messages according to the neighbour discovery message defined by the IETF, preferably as defined in RFC 2461 and RFC 4389.

14. The method of one of the preceding claims, wherein the access nodes are connected to a plurality of user devices (UE1, 20), preferably by a digital subscriber line method or by optical lines.

15. Access node device (AN1)
comprising:
a receiving unit (50) which can receive a data packet (DP1) from a first user device (UE1),
the first data packet comprises:
an address data (UE2-IP) of a second user device or network (UE2) being a second destination address,
a sending unit (52), which can send a second data packet (DP2) to a second access node (AN2),
the second data packet comprises:
the address data (AN2-MAC) of the second access node (AN2) being a first destination address, and
the address (UE2-IP) of the second user device or network (UE2) being a second destination address data,
a determination unit (54), that can determine the address data of the second access node device (AN2) using the address data of the second user device or network (UE2).

16. Access node device (AN1) according to claim 15, the access node device (AN1) comprising a data base access unit (56),
the data base access unit (56) is coupled to the determination unit (54) and used to determine the address data of the second access node device (UE2).

17. Access node device (AN1) according to claim 15 or 16, comprising a query message unit (58),
the query message unit (58) can automatically create at least one query message (NS) to other access node devices (AN2), the query message (NS) comprises:
the address (UE2-IP) of the second user device (UE2).

18. Access node device (AN1) according to claim 15, comprising an answer message unit (60),
the answer message unit (60) can process an answer message (ND) to the query message (NS),
the answer message unit (60) can read the address data of the second address node device (AN2) from the answer message (ND), especially for forwarding this address data to the determination unit (56) or for storing it in a data base (56).

19. Access node device (AN1) according to one of the claims 15 to 18, containing a unit that can perform the steps related to the first access node device (AN1) in the method of one of the claims 1 to 14.
